# EUROPEAN PATENT SPECIFICATION

(11) **EP 2 503 321 B1**
(45) Date of publication and mention of the grant of the patent: **01.12.2021**
(21) Application number: 12002021.9
(22) Date of filing: 22.03.2012
(51) Int. Cl.: G01N 21/21

(54) **APPARATUS FOR IDENTIFYING TOUGHENED GLASS**
VORRICHTUNG ZUR ERKENNUNG VON GEHÄRTETEM GLAS
APPAREIL D'IDENTIFICATION DE VERRE TREMPÉ

(30) Priority: 22.03.2011 GB 201104796
(43) Date of publication of application: 26.09.2012
(73) Proprietor: Hamilton, Neil Colin, Crowborough, Sussex TN6 3SP (GB)
(72) Inventor: Hamilton, Neil Colin, Crowborough, Sussex TN6 3SP (GB)
(74) Representative: Evans, Claire

(56) References cited:
- FR-A- 1 542 777
- GB-A- 2 338 309
- US-A- 5 695 039
- None

## Description

This invention relates to apparatus for identifying toughened glass.

Toughened glass is a safety glass. It can be produced by heating a sheet of ordinary annealed glass and then subjecting the heated glass sheet to rapid cooling to cause high compression in the surfaces of the glass sheet and compensating tension in the sheet interior. It can also be produced by other methods, including chemical treatment.

Toughened glass has greater strength and flexibility than ordinary annealed glass, and is less likely to break on impact. Moreover, if toughened glass is broken, it shatters into a multiplicity of relatively small fragments which do not have sharp edges and so are unlikely to cause injury.

Toughened glass is commonly employed in locations where a person is likely to make physical contact with a sheet of glass. For example, it is used in windows, doors, shower screens and glass-containing furniture. In some instances, safety regulations specify that toughened glass must be used. It is therefore important that a sheet of toughened glass can be identified as such.

In order to assist with identification, toughened glass is supposed to carry an identifying mark. However, many glass sheets and glass-containing products originating from outside the UK do not carry this mark.

It is known that, when a sheet of toughened glass is placed between two crossed polarising filters, coloured patterns can be seen in the filters.

As discussed above, when glass is annealed, stress is introduced into the interior of the glass sheet. This "frozen in" stress leads to stress-induced birefringence, also known as double defraction. Birefringence is the decomposition of a ray of light into two rays. When light passes through a birefringent material, the polarisation of the light is rotated by an amount that depends on the wavelength of the light. It is this effect that leads to coloured patterns being seen when a sheet of toughened glass is placed between two crossed polarising filters.

Although the above effect could be used to identify toughened glass, the coloured patterns are only clearly seen when the glass is held up to the light. This is not always possible or convenient, especially where the glass is already built into a product.

FR-1542777 relates to an apparatus for testing toughened glass. The apparatus comprises a device for generating a beam of circularly polarized light (i.e. a housing including a light source, a collimating lens and a circular polarizer), a prism unit and an analyzer (i.e. a housing including an image-forming lens, a Babinet compensator and an eyepiece).

US-5695039 relates to a method and apparatus for detecting characteristics of any material utilizing electromagnetic radiation. The apparatus contains a separate light generating source and receiver, each having separate polarizing filters

GB-2338309 relates to an apparatus for identifying toughened glass. The apparatus comprises a light source and a polarising filter, the arrangement being such that light from the source passes through the filter onto a sheet of glass which is to be tested, where it is reflected back on to the filter.

It is an object of the invention to seek to provide an apparatus for identifying toughened glass which does not require that the glass should be held up to the light.

Accordingly, the invention provides an apparatus as defined in claim 1.

In use, the polarising filter is positioned above the sheet of glass which is to be tested and the reflecting means is positioned below said glass sheet. Light passes through the polarising filter and is polarised. This polarised light passes through the glass sheet onto the reflecting means, where it is reflected back through the glass sheet and polarising filter once again.

If the glass is ordinary annealed glass, then the light does not undergo birefringence, and the reflected light is the same colour as the incident light. This means that no difference in the polarising filter is seen when annealed glass is being tested. If the glass is toughened glass, however, the light does undergo birefringence, and coloured patterns are seen in the polarising filter.

The apparatus may be used *in situ,* without repositioning the glass sheet, as the glass sheet does not have to be held up to the light.

The apparatus may be used on a production line, in which case it does not have to be readily portable, and the gap between the polarising filter and the reflecting means may be large enough to allow most glass-containing products to be placed between the polarising filter and the reflecting means. Usually, however, a portable apparatus will be required, for example, where the apparatus is to be used *in situ* to test glass sheets. Thus, the distance between the polarising filter and the reflecting means is may in the range 2mm to 2m, preferably 2mm to 1m, more preferably 2mm to 250mm, most preferably 2mm to 50mm.

The casing comprises a web member which extends between the polarising filter and the reflecting means and holds them spaced apart, said member being positioned at one end of the polarising filter and the reflecting means. This will facilitate the insertion of a sheet of glass between the polarising filter and the reflecting means.

The casing comprises at least one support member for supporting the polarising filter and/or the reflecting means, each support member being such that it surrounds the edges of the polarising filter and/or the reflecting means. This will help prevent breakage.

The casing may be such that the polarising filter and the reflecting means are separable. This will allow the polarising filter and the reflecting means to be positioned on either side of the sheet of glass which is to be tested even when the sheet of glass is already built into a product in a way such that it is impossible to achieve this when the polarising filter and the reflecting means are joined together.

Where there is no casing, or the polarising filter and the reflecting means are separable, the polarising filter and the reflecting means may be simply held in position on either side of the sheet of glass which is to be tested. Alternatively, the polarising filter and/or the reflecting means may comprise means for attaching said polarising filter and/or reflecting means to a sheet of glass. This will allow the polarising filter and/or the reflecting means to be fixed in position on either side of the sheet of glass.

Any suitable attachment means may be used. For example, the attaching means may comprise suckers or magnets. If magnets are used, both the polarising filter and the reflecting means should be provided with magnets so that the attractive force between the magnets will hold the polarising filter and the reflecting means to the sheet of glass.

The apparatus may further comprise a light source. The apparatus may then be used where there is no external light source such as a window or a light bulb.

The apparatus may be such that, in use, the light source is positioned on the opposite side of the polarising filter to the reflecting means.

Any reflective body may be used as the reflecting means.

Preferably, the reflecting means is a mirror. The term "mirror" as used herein means any surface that reflects sufficient undiffused light to produce an image of an object placed in front of it, for example, a sheet of glass coated with a metal film or a sheet of polished metal.

The mirror may be a plane mirror.

Any polarising filter may be used. Preferably, the polarising filter is a circular polarising filter as the coloured patterns in the filter are then seen more clearly.

The invention will now be illustrated by way of example with reference to the following drawings of which:
Figure 1 shows a perspective view of an apparatus according to the invention;
Figure 2 shows a cross-sectional side view of the apparatus of Figure 1, in use; and
Figure 3 shows a plan view of the apparatus of Figure 1, in use.

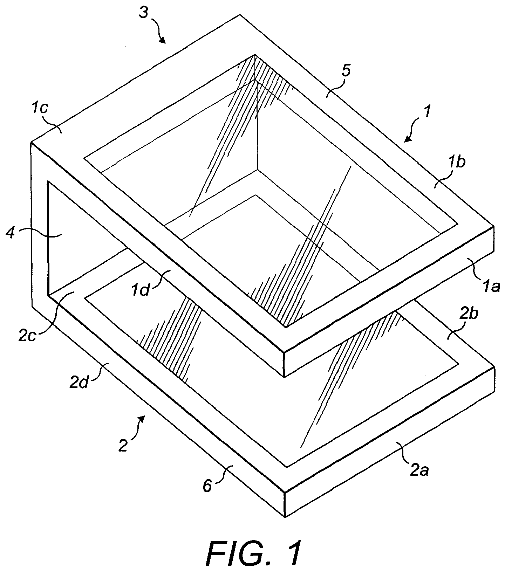

The apparatus shown in Figure 1 comprises a polarising filter 1 and a mirror 2. The polarising filter 1 and the mirror 2 are both rectangular and planar and are held so that they are parallel to one another and spaced apart by a distance of 15mm. The polarising filter 1 and the mirror 2 both measure 100mm by 150mm.

The polarising filter 1 is a circular polarising filter, although any polarising filter may be used. The mirror 2 is an ordinary plane mirror.

The polarising filter 1 and the mirror 2 are mounted in a casing 3. The casing 3 is made from a plastics material, and comprises a planar web member 4 which extends between the polarising filter 1 and the mirror 2, and members 5,6 for supporting the polarising filter 1 and the mirror 2. The web member 4 holds the polarising filter 1 and the mirror 2 spaced apart, and is positioned at one end of the polarising filter 1 and the mirror 2, thereby facilitating the insertion of a sheet of glass 7 between the polarising filter 1 and the mirror 2. Each support member 5, 6 extends around each of the four edges 1 a,b,c,d / 2 a,b,c,d, of the polarising filter 1 /mirror 2 so as to protect them from breakage.

In use, the glass sheet 7 which is to be tested is inserted in the gap 8 between the polarising filter 1 and the mirror 2 so that the polarising filter 1 is above the glass sheet 7, and the mirror 2 is below the glass sheet 7. If the glass sheet 7 is already built into a product, and cannot easily be moved, then the apparatus can be placed so that the polarising filter 1 and the mirror 2 are positioned on either side of the glass sheet 7, rather than the glass sheet 7 being inserted in the gap 8 between the polarising filter 1 and the mirror 2. This may be done *in situ.* The apparatus does not have to be held up to the light.

Light passes through the polarising filter 1 and is polarised. This polarised light passes through the glass sheet 7 onto the mirror 2, where it is reflected back through the glass sheet 7 and polarising filter 1 once again.

If the glass is ordinary annealed glass, then the light does not undergo birefringence, and the reflected light is the same colour as the incident light. This means that no difference in the polarising filter 1 is seen when annealed glass is being tested.

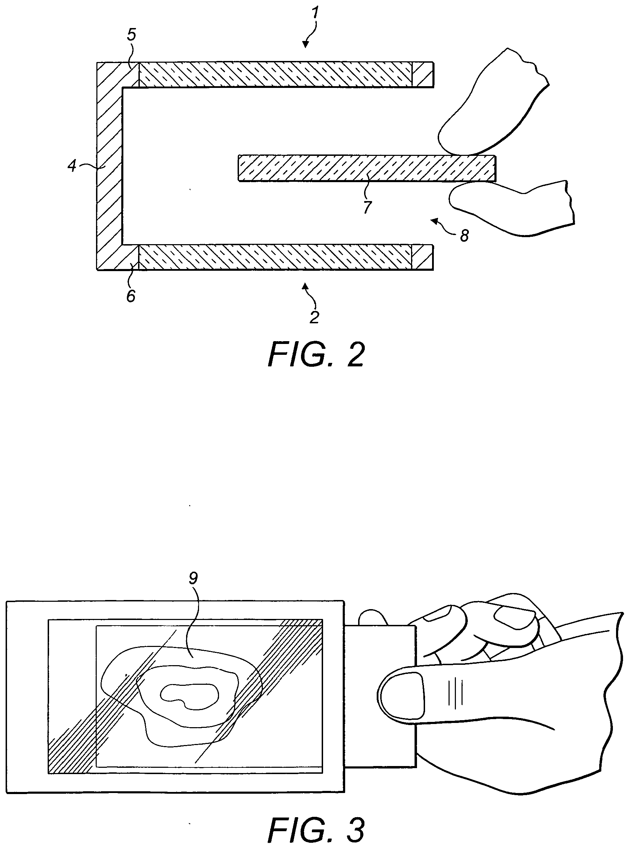

If the glass is toughened glass, however, the light does undergo birefringence, and coloured patterns 9 are seen in the polarising filter 1. These coloured patterns 9 may be seen in Figure 3. It will be appreciated that the coloured patterns 9 shown in Figure 3 are merely an example, and different patterns will be seen for different samples of toughened glass.

Accordingly, the apparatus provides a means of identifying toughened glass, which does not require that the apparatus should be held up to the light.

The above embodiment is described to illustrate the invention, and is not intended to be limiting. The skilled person will be readily able to devise alternative embodiments without departing from the scope of the claims.

## Claims

1. Apparatus for identifying toughened glass, the apparatus comprising a polarising filter (1) and means for reflecting light (2), the apparatus further comprising means (3) for holding the polarising filter (1) and/or the reflecting means (2) such that the polarising filter (1) and the reflecting means (2) are both planar, parallel to each other, spaced apart and positioned such that light passes through the polarising filter (1) and onto the reflecting means (2), where it is then reflected back through the polarising filter (1) once again wherein the apparatus comprises a casing (3) for holding the polarising filter (1) and the reflecting means (2) so that they are spaced apart and the distance between the polarising filter (1) and the reflecting means (2) is in the range 2mm to 2m, wherein the casing (3) comprises a web member (4) and a support member (5, 6), the web member (4) extending between the polarising filter (1) and the reflecting means (2) and holding them spaced apart, said member being positioned at one end of the polarising filter and the reflecting means, the support member (5, 6) for supporting the polarising filter (1) and/or the reflecting means (2), each support member being such that it surrounds the edges of the polarising filter and/or the reflecting means.

2. Apparatus according to claim 1, wherein the casing (3) is such that the polarising filter (1) and the reflecting means (2) are separable.

3. Apparatus according to any preceding claim, wherein the polarising filter (1) and/or the reflecting means (2) comprise means for attaching said polarising filter and/or reflecting means to a sheet of glass.

4. Apparatus according to claim 3, wherein the attaching means comprise suckers or magnets.

5. Apparatus according to any preceding claim, wherein the apparatus further comprises a light source.

6. Apparatus according to claim 5, wherein the apparatus is such that, in use, the light source is positioned on the opposite side of the polarising filter (1) to the reflecting means (2).

7. Apparatus according to any preceding claim, wherein the reflecting means is a mirror (2).

8. Apparatus according to claim 7, wherein the mirror is a plane mirror.

9. Apparatus according to any preceding claim, wherein the polarising filter (1) is a circular polarising filter.

## Patentansprüche

1. Vorrichtung zum Identifizieren von gehärtetem Glas, worin die Vorrichtung einen Polarisationsfilter (1) und Mittel zum Reflektieren von Licht (2) umfasst, worin die Vorrichtung weiter Mittel (3) zum Halten des Polarisationsfilters (1) und/oder der reflektierenden Mittel (2) umfasst, so dass der Polarisationsfilter (1) und die reflektierenden Mittel (2) beide planar, parallel zueinander, voneinander beabstandet und so positioniert sind, dass Licht durch den Polarisationsfilter (1) und auf das reflektierende Mittel (2) gelangt, wo es dann wieder durch den Polarisationsfilter (1) zurückreflektiert wird, worin die Vorrichtung ein Gehäuse (3) zum Halten des Polarisationsfilters (1) und des reflektierenden Mittels (2) umfasst, so dass sie voneinander beabstandet sind und der Abstand zwischen dem Polarisationsfilter (1) und dem reflektierenden Mittel (2) im Bereich von 2 mm bis 2 m liegt, worin das Gehäuse (3) ein Stegelement (4) und ein Trägerelement (5, 6) umfasst, worin sich das Stegelement (4) zwischen dem Polarisationsfilter (1) und dem reflektierenden Mittel (2) erstreckt und diese auf Abstand hält, worin das Element an einem Ende des Polarisationsfilters und des reflektierenden Mittels angeordnet ist, worin das Trägerelement (5, 6) zum Stützen des Polarisationsfilters (1) und/oder des reflektierenden Mittels (2) dient, worin jedes Trägerelement derart ausgestaltet ist, dass es die Kanten des Polarisationsfilters und/oder des reflektierenden Mittels umgibt.

2. Vorrichtung nach Anspruch 1, wobei das Gehäuse (3) so ausgestaltet ist, dass der Polarisationsfilter (1) und das reflektierende Mittel (2) trennbar sind.

3. Vorrichtung nach einem der vorstehenden Ansprüche, worin der Polarisationsfilter (1) und/oder das reflektierende Mittel (2) Mittel zum Befestigen des Polarisationsfilters und/oder des reflektierende Mittels an einer Glasscheibe umfasst.

4. Vorrichtung nach Anspruch 3, worin die Befestigungsmittel Saugnäpfe oder Magnete umfassen.

5. Vorrichtung nach einem der vorstehenden Ansprüche, worin die Vorrichtung weiter eine Lichtquelle umfasst.

6. Vorrichtung nach Anspruch 5, wobei die Vorrichtung so ausgestaltet ist, dass die Lichtquelle bei Gebrauch auf der dem reflektierenden Mittel (2) abgewandten Seite des Polarisationsfilters (1) angeordnet ist.

7. Vorrichtung nach einem der vorstehenden Ansprüche, worin das reflektierende Mittel ein Spiegel (2) ist.

8. Vorrichtung nach Anspruch 7, worin der Spiegel ein Planspiegel ist.

9. Vorrichtung nach einem der vorstehenden Ansprüche, worin der Polarisationsfilter (1) ein Zirkularpolarisationsfilter ist.

## Revendications

1. Appareil d'identification de verre trempé, l'appareil comprenant un filtre de polarisation (1) et des moyens de réflexion de lumière (2), l'appareil comprenant en outre des moyens (3) pour maintenir le filtre de polarisation (1) et/ou les moyens de réflexion (2) de telle sorte que le filtre de polarisation (1) et les moyens de réflexion (2) sont tous deux planaires, parallèles l'un à l'autre, espacés et positionnés de telle sorte que de la lumière passe à travers le filtre de polarisation (1) et sur les moyens de réflexion (2), où elle est ensuite réfléchie à travers une fois de plus le filtre de polarisation (1), dans lequel l'appareil comprend un boîtier (3) pour maintenir le filtre de polarisation (1) et les moyens de réflexion (2) de sorte qu'ils sont espacés et la distance entre le filtre de polarisation (1) et les moyens de réflexion (2) se trouve dans la plage de 2 mm à 2 m, dans lequel le boîtier (3) comprend un élément de bande (4) et un élément de support (5, 6), l'élément de bande (4) s'étendant entre le filtre de polarisation (1) et les moyens de réflexion (2) et les maintenant espacés, ledit élément étant positionné à une extrémité du filtre de polarisation et des moyens de réflexion, l'élément de support (5, 6) supportant le filtre de polarisation (1) et/ou les moyens de réflexion (2), chaque élément de support étant tel qu'il entoure les bords du filtre de polarisation et/ou des moyens de réflexion.

2. Appareil selon la revendication 1, dans lequel le boîtier (3) est tel que le filtre de polarisation (1) et les moyens de réflexion (2) peuvent être séparés.

3. Appareil selon l'une quelconque des revendications précédentes, dans lequel le filtre de polarisation (1) et/ou les moyens de réflexion (2) comprennent des moyens pour fixer ledit filtre de polarisation et/ou lesdits moyens de réflexion à une feuille de verre.

4. Appareil selon la revendication 3, dans lequel les moyens de fixation comprennent des ventouses ou aimants.

5. Appareil selon l'une quelconque des revendications précédentes, dans lequel l'appareil comprend en outre une source de lumière.

6. Appareil selon la revendication 5, dans lequel l'appareil est tel que, en utilisation, la source de lumière est positionnée sur le côté du filtre de polarisation (1) opposé aux moyens de réflexion (2).

7. Appareil selon l'une quelconque des revendications précédentes, dans lequel les moyens de réflexion sont un miroir (2).

8. Appareil selon la revendication 7, dans lequel le miroir est un miroir plan.

9. Appareil selon l'une quelconque des revendications précédentes, dans lequel le filtre de polarisation (1) est un filtre de polarisation circulaire.
